# EUROPEAN PATENT SPECIFICATION

(11) **EP 0 595 367 B1**
(45) Date of publication and mention of the grant of the patent: **21.05.1997**
(21) Application number: 93118711.6
(22) Date of filing: 22.01.1989
(51) Int. Cl.: G01D 5/20

(54) **Displacement transducer with opposed coils for improved linearity and temperature compensation**
Weggeber mit gegenüberliegenden Spulen für verbesserte Linearität und Temperaturkompensation
Capteur de déplacement avec des bobines opposées, pour améliorer la linéarité et compensation de température

(30) Priority: 22.01.1988 US 147142; 22.01.1988 US 146824; 22.01.1988 US 147241; 07.03.1988 US 165138; 07.03.1988 US 164979; 22.01.1988 US 146823
(43) Date of publication of application: 04.05.1994
(62) Divisional of application: 89710006.1
(73) Proprietor: DATA INSTRUMENTS INC., Acton, MA 01720 (US)
(72) Inventor: Redlich, Robert W., Athens, Ohio 45 701 (US)
(74) Representative: Matschkur, Götz, Lindner Patent- und Rechtsanwälte

(56) References cited:
- AT-A- 300 391
- US-A- 4 667 158

## Description

### Technical Field

This invention relates to a displacement measuring apparatus of the type having a coil means and an electrically conducting, non-ferromagnetic wall, moving in telescoping relation with the coil means and excited by a signal of a sufficiently high frequency that skin effect in the wall permits wall displacement to vary the reluctance of the coil flux path and thereby vary its inductance, approximately, proportionally to displacement.

From AT-A-300 391 a displacement transducer including a measuring coil in an AC circuit is already known wherein a construction element made of electrically conducting material is arranged within the magnetic field of the coil. Eddy currents are induced therein generating a magnetic counter field changing the characteristics of the coil. In particular it is disclosed to arrange two coils on a single bobbin. Therein, the construction element of electrically conducting material can be displaced as a core. The resulting differential measure value at the coils represents the displacement.

From US-A-3 218 591 a transducer arrangement is known in which two coils are arranged. A core flexible therein also includes two portions, one of magnetic and the other of non-magnetic material. As the core is moved, a differential signal is generated by the imbalance of the bridge circuit, going either possitiv or negativ, depending on the direction of movement. The flexible core arrangement can be used for coarse measurement.

A linear displacement measuring apparatus of the type to which the invention relates is shown in US-A-4,667,158 and is illustrated in Fig. 1. The transducer is a helical coil 2 of an electrical conductor wound at a uniform pitch on a cylindrical, thin-walled tube or bobbin 1 of an electrical insulator or a poor conductor such as stainless steel. Preferably, the tube has suitable properties for use as a dry bearing surface, for example Teflon. The helical coil 2 is fixed to the first of two relatively movable bodies for which the relative displacement is to be measured.

A non-ferromagnetic, electrically conducting rod or preferably a tube forms a core 3 which is slidable within the bobbin 1. It is made, for example, of aluminum or copper and is fixed to the second of the two relatively moving bodies.

Preferably the coil is surrounded by a low and constant reluctance path so that change in coil inductance with respect to core 3 movement is maximized. This is preferably accomplished by positioning a material, such as ferrite 5, having a high magnetic permeability, but low electrical conductivity surrounding the coil. This material provides the desired low magnetic reluctance while not permitting the formation of significant eddy currents and not exhibiting a substantial skin effect.

Preferably this high permeability, low conductivity material is itself surrounded with a tubular shield 4 of high electrical conductivity to confine the field of the coil to the ferrite 5 and the skin effect layer of the shield 4 and to prevent external fields from linking with the coil 2. The shield 4 confines the magnetic flux generated by the current in the coil 2 and shields it from stray fields over a wide frequency range. It is preferably made of a material having both high electrical conductivity and high magnetic permeability, such as soft iron or low carbon steel.

An AC electrical energy source 6 and a detector circuit means 7, preferably in the form of a bridge circuit, are electrically connected to the coil 2. The AC source 6 operates at a frequency, preferably in the range of 50-200Khz, which may be designated a carrier frequency f_{c}. An important key to the efficient and effective operation of a transducer of this type is that f_{c} be high enough that the skin depth in the core 3 is substantially less than the radius of the core and less than the thickness of the wall of the tube.

The source 6 drives the coil through a resistor 8 which has a resistance which is much greater than the inductive reactance of the coil and its associated structures so that effectively the transducer is driven by a current source. Therefore, the voltage across the transducer coil 5 is approximately (V/R)∗(2 pi f_{c} L).

The detector circuit 7 detects a signal at an AM detector 9 which is proportional to the inductance of the coil 2 and its associated structures. The coil voltage is proportional to coil inductance, which in turn is proportional to the displacement of the core 3.

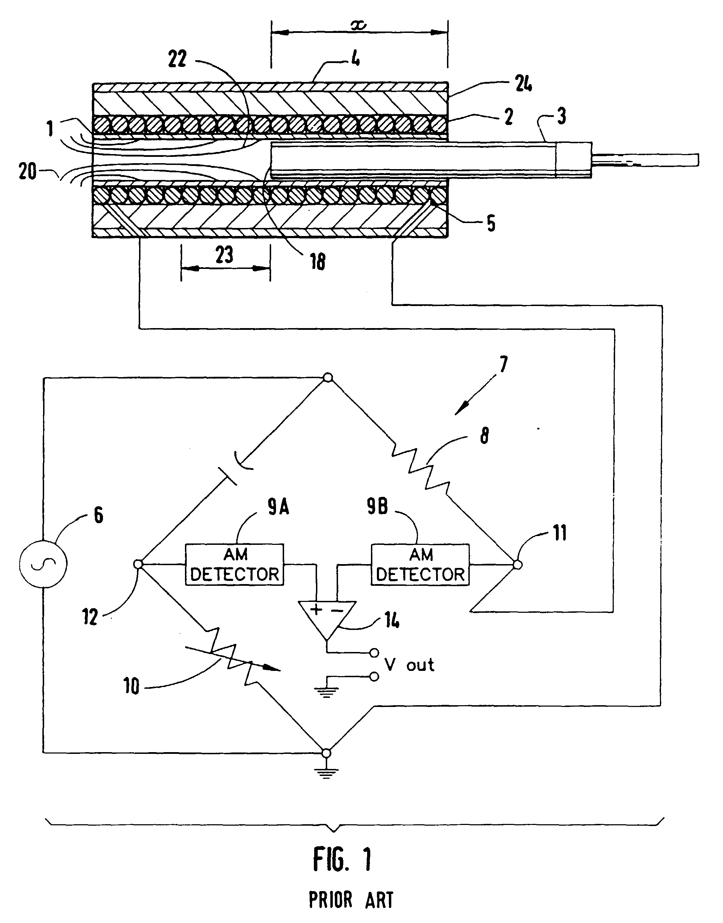

In the operation of the basic concept of the displacement measurement apparatus of Fig. 1, the AC source 6 excites the bridge circuit, including the transducer coil 2 in one of its branches. Because of the skin effect at the frequency at which the AC source 6 is operating, magnetic fields in the core 3 are confined to a thin layer approximately equal to the sum of the skin depth in the core material which is typically on the order of 0.25 millimeters thick plus the spacing from the exterior of the core 3 to the interior of the coil 2. Because the skin depth is considerably less than the radius of the core, the magnetic flux is confined to a path in the region of the core 3 which has a considerably smaller cross-sectional area than the flux path where there is no core 3. Since reluctance is inversely proportional to the cross-sectional area of the flux path, the core 3 has the effect of substantially increasing the reluctance and therefore substantially reducing the magnetic flux in the region of the core. With the core 3 partially inserted in the coil 2 of the transducer, the interior of the coil 2 can be divided into the region occupied by the core 3 where magnetic flux is low, and the region unoccupied by the core where magnetic flux is relatively high compared to the core region. Therefore, the flux linkages of the coil are substantially reduced as a result of the insertion of the core and are reduced in proportion of the extent of the insertion of the core within the coil 2. This, in turn, proportionally reduces the self inductance of the coil 2. Thus, the movable core varies the self inductance and the impedance and therefore varies the voltage across the transducer in proportion to its displacement.

While a great variety of detector circuits are known to those skilled in the art for detecting a signal which is proportional to the changes in coil inductance or voltage, the detector circuit of Fig. 1 operates well. A bridge is designed to be brought into AC amplitude balance by adjustable resistor 10 when the core 3 is centered within the coil 2. The AC source 6 is a signal at a frequency f_{c}. The amplitude of the transducer signal at frequency f_{c} at the node 11 of the bridge proportional to the displacement of the core 3. The amplitude of the balance signal at frequency f_{c} at the opposite node 12 is adjusted so that it is equal to the amplitude of the transducer signal at node 11 when the core 3 is centered within the coil 2. A detector circuit means comprising two AM detectors 9A and 9B and a differential amplifier 14 are provided to aetect the difference between the modulation amplitudes at the nodes 11 and 12.

The displacement of the core 3 is effectively providing an amplitude modulated signal at the terminal 11, the amplitude of which is proportional to displacement of the core 3 and may be detected by the AM detector 9B to provide an output signal which is directly proportional to the displacement of the core 3. The balance signal at node 12 is detected by an AM detector circuit 9A. The output signals from the two AM detectors 9A and 9B are applied to a differential amplifier 14, the output of which provides a signal Vₒᵤₜ which is proportional to the displacement of the core 3. Further details of the basic concept are described in more detail in my above cited U.S. Patent.

One problem with transducers of this type is that they exhibit some temperature dependence, that is the output voltage is a function of their operating temperature. The principal cause of the temperature dependence is the temperature dependence of the skin depth. Since the transducer of the present invention utilizes the skin effect to confine the flux to a considerably smaller cross-sectional area of the flux path in the region of the movable core, changes in temperature, which cause changes in the skin depth, result in variations in the cross-sectional area of the flux path between the coil and the wall or core. This changes the reductance of the flux path which causes changes in the flux resulting ultimately in changes in the inductance in the coil as a function of temperature. In the bridge circuit of Fig. 1, the balancing voltage at node 11 is not affected by temperature in the same way as the transducer voltage at node 12. Therefore, the balance of the bridge is temperature dependent and distance x at which bridge balance occurs is temperature dependent.

Yet another problem with a transducer constructed as described above is that its inductance and therefore the output voltage of the detector means is not exactly proportional to the relative displacement X shown in Fig. 1 of the core 3 into the coil 2. The relative displacement X is measured as the position of the interior end 18 of the core 3 with respect to the right or entry end of the coil 2. As a result, a non-linear relationship exists for a simple coil illustrated in Fig. 1 in which the rate of change of the output signal from the detector means with respect to a change in the displacement of the core 3 decreases as the displacement X increases. Therefore, the actual transfer function falls increasingly below a straight line, ideal, linear transfer function as X increases. This non-linearity is the result of not only increases in losses as the core displacement increases because the core is relatively lossy, but also the non-uniformity of the flux in the transition region adjacent the interior end of the wall or core 3.

It is therefore an object of the present invention to reduce the non-linearity of the transfer function relating core displacement to the output signal and to achieve a displacement transducer that has an inherent null position that is unaffected by temperature.

A further object of the present invention is to increase the sensitivity of the transducer which operates on the above principles and approximately double that sensitivity.

These objects are achieved with the displacement measuring apparatus as defined in claim 1. Further embodiments and features on the basis of the invention are apparent from the dependent claims. The invention is based on the use of two coils which are opposed so that the signals are substracted to reduce non-linearity, to increase sensitivity and, most important, to achieve a displacement transducer having an inherent null output position that is unaffected by temperature.

The invention utilizes a pair of current conducting coils which are both mounted to the first one of the two relatively movable bodies. An electrically conducting, non-ferromagnetic wall means is positioned in telescoping relationship to both of the coils. The wall means is mounted to the second body for axial displacement relative to both of the coils for varying the relative coil/wall means overlap by increasing the overlap with one coil when decreasing the overlap with the other. This simultaneously increases the inductance of one coil and decreases the inductance of the other. An AC electrical energy source is connected to apply an AC signal to each of the coils at a frequency which is at least high enough that the skin depth of the wall means is less than the physical depth of the wall. A detector circuit means is connected to the coils for detecting a signal which is proportional to the difference between the inductances of the two coils. By obtaining the difference signal, the non-linearity of the signals are subtracted from each other and thereby approximately eliminated while the displacement dependent portion of the signals are essentially added and thereby doubled. This results from the fact that the displacement dependent signal from one coil is increased when the displacement dependent signal from the other is decreased. When these are algebraically subtracted, the result is the sum of the absolute value of the amplitudes of the displacement dependent portions of the signals. A null or zero output occurs when the voltages across the two coils are equal. Since these voltages have identical temperature dependence, the relative displacement at which null occurs is independent of temperature.

### Brief Description Of Drawings

Fig. 1 is a diagrammatic view of my prior art transducer and measuring apparatus illustrated in my prior patent 4,667,158.

Fig. 2 is a diagrammatic view of the preferred embodiment of the invention.

Fig. 3 is a diagrammatic view of an alternative embodiment of the invention.

Fig. 4 is a diagrammatic view of yet another alternative embodiment of the invention.

In describing the preferred embodiment of the invention which is illustrated in the drawings, specific terminology will be resorted to for the sake of clarity. However, it is not intended that the invention be limited to the specific terms so selected and it is to be understood that each specific term includes all technical equivalents which operate in a similar manner to accomplish a similar purpose. For example, the word connected or terms similar thereto are often used. They are not limited to direct connection but include connection through other circuit elements where such connection is recognized as being equivalent by those skilled in the art.

### Detailed Description

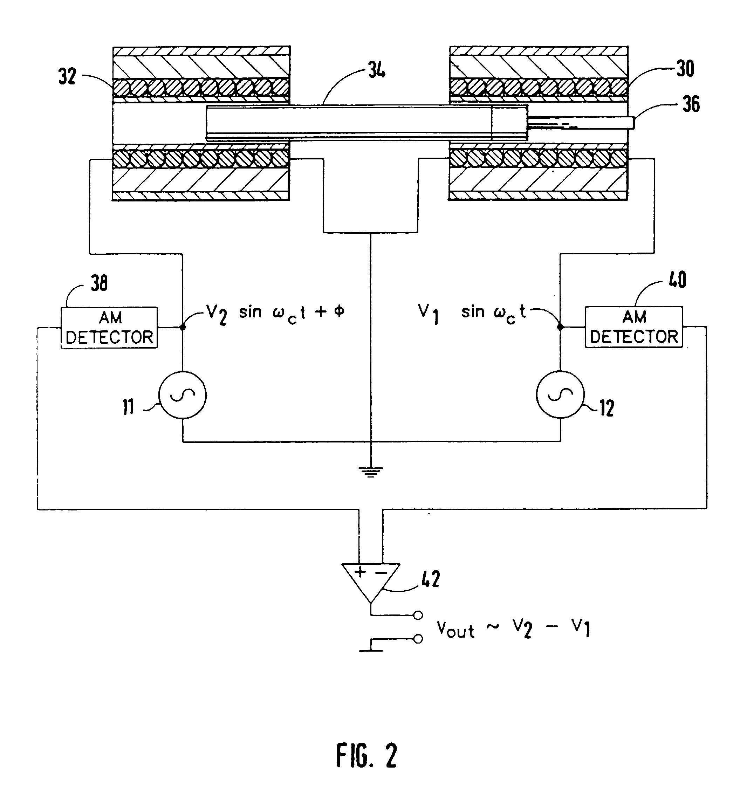

Referring to Fig. 2, the present invention utilizes a pair of current conducting coils 30 and 32 which are connected to a first one of the two relatively movable bodies for which the relative displacement is to be measured. The coils 30 and 32 are surrounded by low reluctance flux paths and shields of the same type and for the same reasons as those illustrated in Fig. 1. An electrically conducting, non-ferromagnetic wall means, such as a cylindrical core 34, is positioned in telescoping relationship to both of the coils 30 and 32. It is mounted to the second one of the removable bodies, for example by means of a connecting arm 36 which is preferably non-ferromagnetic and non-conducting so as to be relatively electrically inert. The core 34 moves axially with respect to the coils 30 and 32 in a manner which varies the relative coil/core overlap.

For example, as the core 34 moves to the left in Fig. 2, its overlap with coil 32 is increased, while its overlap with coil 30 is decreased. Similarly, as the core 34 is moved to the right, the overlap with coil 30 is increased and the overlap with coil 32 is decreased.

For the reasons stated above in connection with Fig. 1, increasing the overlap with the coil 30 or the coil 32 decreases the inductance of that coil with the reduced overlap. Decreasing the overlap increases the inductance. Thus, each of the two coils 30 and 32 operates individually with respect to the core 34 in the manner of the core 2 of Fig. 1.

A pair of electrical energy sources I1 and I2, which are preferably constant current sources, are connected to apply an AC signal to each of the coils. The AC signal is at a frequency which is at least high enough that the skin depth of the wall means is less than the physical depth of the wall for the reasons described in connection with the embodiment of Fig. 1.

The detector circuit means is connected to the coils 30 and 32 for detecting a signal which is proportional to the difference between the inductances of the two coils. In particular, the preferred detector circuit comprises a first AM detector 38 connected to the coil 32, and a second AM detector 40 connected to the coil 30. The outputs of these two AM detectors are then connected to a differential amplifier 42, the output of which provides the output voltage which is proportional to the displacement of the core 34.

Preferably, the two coils 30 and 32 have substantially identical, electrical and thermoelectrical characteristics, although an equivalent result can be accomplished by other means. Since the characteristics are identical, the circuit of Fig. 2 is completely symmetrical and an increase in the inductance of one coil is accompanied with a decrease in the inductance of the other, the subtracting of the voltage across one from the voltage across the other results in the summation of the absolute values of the portion of the voltage across each coil which is a function of displacement. However, since temperature will have an identical effect in each coil, a subtraction of the signals results in a subtraction of the temperature errors if the two signals are equal at a particular temperature. Thus, a signal appears at the input to AM detector 40 which may be represented as V₁ sin w_{c}t , while the signal at the input to detector 38 may be represented as V₂ sin w_{c}t + Φ . The Φ represents a phase difference between the two signals. Both V₁ and V₂ represent the amplitude at the carrier frequency and therefore are each a function of the displacement of the core 34. These amplitudes V₁ and V₂ are detected and the phase difference problems are eliminated by the use of separate AM detectors 38 and 40, to provide output signals from the AM detectors which are proportional to the inductance of the respective coils. These detected amplitudes are applied to the differential amplifier 42 to provide an output signal which is proportional to V₂-V₁ and therefore is proportional to the displacement of the core 34.

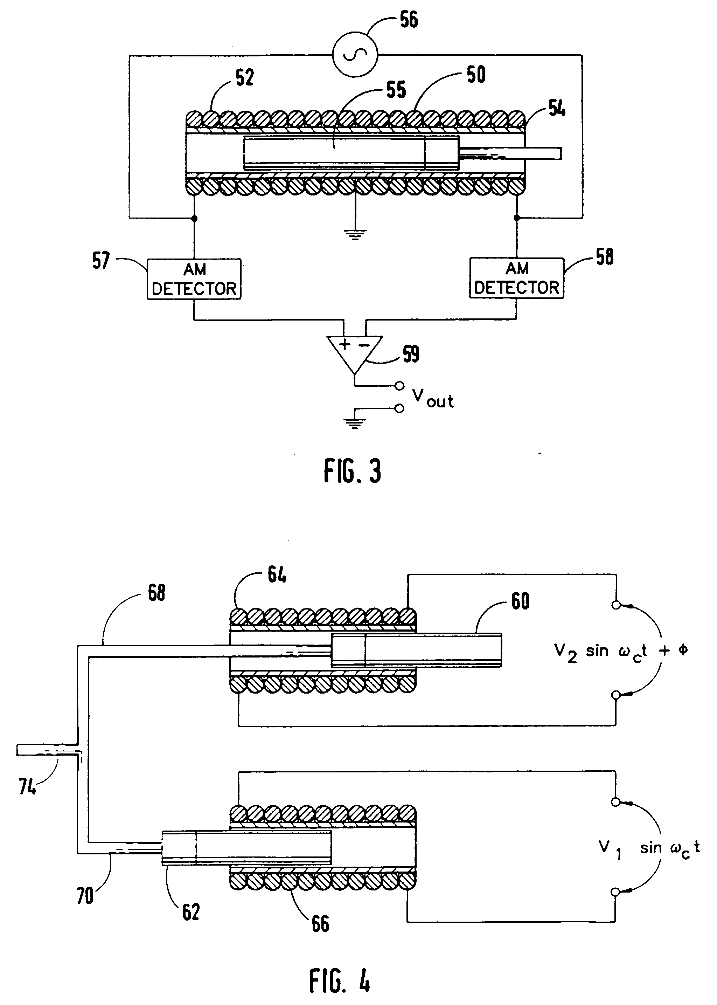

Fig. 3 illustrates a different embodiment of the invention in which the coils 50 and 52 are wound on a single, common coil formed bobbin 54 and are adjacent each other. A constant current source 56 is connected across these coils as illustrated. The detector circuit means consisting of AM detectors 57 and 58 and differential amplifier 59 is identical to the detector circuit of Fig. 1.

Fig. 3 illustrates one of several alternative embodiments of the invention which may be created. The two coils may be wound on the same or different cores and may be coaxial or not. Ordinarily there is no flux linkage between the coils even when they are adjacent because the core essentially isolates the two coils. The windings may be wound in the same or opposite directions.

It is preferred that the coils be constructed so that they have identical electrical and thermoelectrical characteristics so that the output signal Vₒᵤₜ is zero when the core 34 or 55 is in the central position. In this manner, the polarity of the output signal Vₒᵤₜ represents the direction of displacement from the zero center position and the amplitude of Vₒᵤₜ represents the displacement.

Fig. 4 represents yet another embodiment in which the wall means comprises a pair of wall members, such as core members 60 and 62, each one in overlapping relation to a different one of two coils 64 and 66. The cores 60 and 62 are physically connected to each other by preferably electrically inert actuator rods 68 and 70 which are in turn connected to each other and to an actuator rod 74 which is connected to one of the two relatively moving bodies, the coils being connected to the other.

The terms "overlap" or "in overlapping relationship" are chosen to describe the relationship between the wall members and the coil regardless of which is in telescopic relationship within the other. The embodiments of the present invention may be constructed with the core outside or inside the coil in telescoping, overlapping relationship.

## Claims

1. A displacement measuring apparatus comprising:
a) a pair of current conducting coils (30,32;50,52;64,66) connected to a first one (1) of two relatively movable bodies (1,3);
b) an electrically conducting, non-ferromagnetic wall means (34;55;60,62) in telescoping relationship to both of the coils (30,32;50,52;64,66) and mounted to the second body (3) for axial displacement relative to both of the coils (30,32;50,52;64,66) for varying the relative coil/wall means overlap by increasing the overlap with one coil (30;50;64) when decreasing the overlap with the other (32;52;66) and thereby simultaneously increasing the inductance of one coil (30;50;64) and decreasing the inductance of the other coil (32;52;66);
c) an AC electrical energy source (11,12;56) connected to apply an AC signal to each of said coils (30,32;50,52;64,66) at a frequency which is at least high enough that the skin depth of the wall means is less than the physical depth of the wall means; and
d) a detector circuit means comprising first and second amplitude modulation detectors (38,40;57,58) each connected to one of the coils (30,32;50,52;64,66) for detecting a signal which is proportional to the difference between the inductances of the two coils (30,32;50,52;64,66); and
e) a differential amplifier(42;59), the inputs of which being connected to one of said amplitude modulation detectors (38,40;57,58) each and the output of which providing an output voltage proportional to the displacement of said wall means (34;55;60,62).

2. Apparatus in accordance with claim 1 wherein said coils (30,32;50,52;64,66) have substantially identical electrical and thermoelectrical characteristics.

3. Apparatus in accordance with claim 1 or 2, wherein said coils (30,32;50,52) are coaxial.

4. Apparatus in accordance with claim 3, wherein the wall means comprises a single tubular wall (34;55) in overlapping relation with both coils (30,32;50,52).

5. Apparatus in accordance with claim 3 or 4 wherein said coils (64,66) are wound upon a common coil form bobbin (54).

6. Apparatus in accordance with any of the preceding claims 1-3, wherein said wall means comprises a pair of wall members (60;62) each in overlapping relation to a different one of the coils (64,66).

7. Apparatus in accordance with claim 6 wherein said coils (64,66) are aligned along parallel axes and said wall members (60,62) are physically connected to the second body.

8. Apparatus in accordance with claim 6 or 7 wherein each of said wall members (60,62) comprises a tube.

9. Apparatus in accordance with any of the preceding claims, wherein:
the AC electrical energy source comprises a pair of substantially constant current sources (11,12) each connected to a first terminal of a different one of said coils (30,32) and to a common ground;
the second terminal of each coil is connected to the common ground; and
the detector circuit means comprises a pair of amplitude modulation demodulators (38,40), the input of each connected to the first terminal of each coil (30,32) and a differential amplifier (42) having its inputs connected to the output of each demodulator (38,40).

## Patentansprüche

1. Wegmessanordnung mit folgenden Elementen:
a) Einem Paar von stromleitenden Spulen (30,32;50,52;64,66), welche mit einem ersten (1) von zwei relativ zueinander bewegbaren Körpern (1,3) verbunden sind;
b) einem elektrisch leitenden, nicht ferromagnetischen Wandelement (34;55;60,62), das sich in teleskopartiger Beziehung zu beiden Spulen (30,32;50,52;64,66) befindet und an dem zweiten Körper (3) zur axialen Verschiebung relativ zu beiden Spulen (30,32;50,52;64,66) befestigt ist, um die relative Überlappung zwischen Spule/Wandelement zu variieren, wobei die Überlappung mit einer Spule (30;50;64) erhöht wird, wenn die Überlappung mit der anderen (32;52;66) reduziert wird, wodurch gleichzeitig die Induktivität einer Spule (30;50;64) erhöht und die der anderen Spule (32;52;66) reduziert wird;
c) einer elektrischen Wechselstromenergiequelle (11,12;56), welche derart angeschlossen ist, daß ein Wechselstromsignal an jede der Spulen (30,32;50,52;64,66) angelegt wird mit einer Frequenz, die wenigstens hoch genug ist, damit die Skintiefe des Wandelements kleiner ist als die physikalische Tiefe des Wandelements;
d) einem Detektorschaltkreiselement mit einem ersten und einem zweiten Modulationsamplitudendetektor (38,40;57,58), von denen jeder an eine der Spulen (30,32;50,52;64,66) angeschlossen ist, um ein Signal zu detektieren, das proportional zu der Diffrerenz zwischen den Induktivitäten der zwei Spulen (30,32;50,52;64,66) ist; und
e) einem Differenzverstärker (42;59), dessen Eingänge an je einem der Modulationsamplitudendetektoren (38,40;57,58) angeschlossen sind, und dessen Ausgang eine zu der Verschiebung des Wandelements (34;55;60,62) proportionale Ausgangsspannung liefert.

2. Anordnung nach Anspruch 1, dadurch gekennzeichnet, daß die Spulen (30,32;50,52;64,66) etwa identische elektrische und thermoelektrische Eigenschaften aufweisen.

3. Anordnung nach Anspruch 1 oder 2, dadurch gekennzeichnet, daß die Spulen (30,32;50,52) koaxial sind.

4. Anordnung nach Anspruch 3, dadurch gekennzeichnet, daß das Wandelement eine einzige Röhrenwand (34;55) in überlappender Relation mit beiden Spulen (30,32;50,52) aufweist.

5. Anordnung nach Anspruch 3 oder 4, dadurch gekennzeichnet, daß die Spulen (64,66) auf eine gemeinsame, spulenförmige Rolle (54) aufgewikkelt sind.

6. Anordnung nach einem der vorangehenden Ansprüche 1 bis 3, dadurch gekennzeichnet, daß das Wandelement ein Paar von Wandteilen (60;62) aufweist, von denen jedes sich in überlappender Beziehung zu einer unterschiedlichen Spule (64,66) befindet.

7. Anordnung nach Anspruch 6, dadurch gekennzeichnet, daß die Spulen (64,66) entlang paralleler Achsen ausgerichtet sind und die Wandteile (60,62) physisch mit dem zweiten Körper verbunden sind.

8. Anordnung nach Anspruch 6 oder 7, dadurch gekennzeichnet, daß jedes der Wandteile (60,62) eine Röhre umfaßt.

9. Anordnung nach einem der vorangehenden Ansprüche, dadurch gekennzeichnet, daß:
- die elektrische Wechselstromenergiequelle ein Paar von etwa konstanten Stromquellen (11,12) umfaßt, von denen jede an einem ersten Anschluß unterschiedlicher Spulen (30,32) sowie an Masse angeschlossen ist;
- der zweite Anschluß jeder Spule an Masse angeschlossen ist; und
- das Detektorschaltkreiselement ein Paar von Modulationsamplitudendemodulatoren (38,40) aufweist, deren Eingänge an dem ersten Anschluß jeder Spule (30,32) angeschlossen sind, und einen Differentialverstärker (42), dessen Eingänge an den Ausgängen der Demodulatoren (38,40) angeschlossen sind.

## Revendications

1. Appareil de mesure de déplacement comprenant :
a) une paire de bobines électroconductrices (30, 32 ; 50, 52 ; 64, 66) raccordées à un premier (1) de deux corps (1, 3) mobiles l'un par rapport à l'autre ;
b) un moyen formant paroi (34 ; 55 ; 60, 62) non ferromagnétique, électroconducteur, relié de manière télescopique aux deux bobines (30, 32 ; 50, 52 ; 64, 66) et assemblé sur le second corps (3) en vue d'un déplacement axial par rapport aux deux bobines (30, 32 ; 50, 52 ; 64, 66) pour faire varier le recouvrement relatif bobine/moyen formant paroi en augmentant le recouvrement avec une bobine (30 ; 50 ; 64) quand diminue le recouvrement avec l'autre bobine (32 ; 52 ; 66) et augmenter ainsi simultanément l'inductance de l'une (30 ; 50 ; 64) des bobines et diminuer l'inductance de l'autre bobine (32 ; 52 ; 66) ;
c) une source d'énergie électrique (11, 12 ; 56) en courant alternatif en circuit pour appliquer un signal en courant alternatif à chacune desdites bobines (30, 32 ; 50, 52 ; 64, 66), à une fréquence qui est au moins suffisamment élevée pour que l'épaisseur de peau du moyen formant paroi soit inférieure à l'épaisseur physique du moyen formant paroi ; et
d) un moyen formant circuit détecteur comprenant des premier et second détecteurs de modulation d'amplitude (38, 40 ; 57, 58), chacun étant raccordé à une des bobines (30, 32 ; 50, 52 ; 64, 66) afin de détecter un signal qui est proportionnel à la différence entre les inductances des deux bobines (30, 32 ; 50, 52 ; 64, 66) ; et
e) un amplificateur différentiel (42 ; 59), dont chaque entrée est raccordée à un desdits détecteurs de modulation d'amplitude (38, 40 ; 57, 58) et dont la sortie fournit une tension de sortie proportionnelle au déplacement dudit moyen formant paroi (34 ; 55 ; 60, 62).

2. Appareil selon la revendication 1, dans lequel lesdites bobines (30, 32 ; 50, 52 ; 64, 66) ont des caractéristiques électriques et thermoélectriques sensiblement identiques.

3. Appareil selon la revendication 1 ou 2, dans lequel lesdites bobines (30, 32 ; 50, 52) sont coaxiales.

4. Appareil selon la revendication 3, dans lequel le moyen formant paroi comprend une seule paroi tubulaire (34 ; 55) qui est en relation de recouvrement avec les deux bobines (30, 32 ; 50, 52).

5. Appareil selon la revendication 3 ou 4, dans lequel lesdites bobines (64, 66) sont enroulées sur une armature en forme de bobine commune (54).

6. Appareil selon l'une quelconque des revendications précédentes 1 à 3, dans lequel ledit moyen formant paroi comprend une paire d'éléments formant parois (60 ; 62), chacun étant en relation de recouvrement avec l'une différente des bobines (64, 66).

7. Appareil selon la revendication 6, dans lequel lesdites bobines (64, 66) sont alignées suivant des axes parallèles et lesdits éléments formant parois (60, 62) sont reliés physiquement au second corps.

8. Appareil selon la revendication 6 ou 7, dans lequel chacun des éléments formant paroi (60, 62) comprend un tube.

9. Appareil selon l'une quelconque des revendications précédentes, dans lequel :
La source d'énergie électrique en courant alternatif comprend une paire de sources de courant sensiblement constant (11, 12), chacune étant raccordée à une première borne de l'une différente desdites bobines (30, 32) et à une masse commune ;
la seconde borne de chaque bobine est raccordée à la masse commune ; et le moyen formant circuit détecteur comprend une paire de démodulateurs de modulation d'amplitude (38, 40), dont chaque entrée est reliée à la première borne de chaque bobine (30, 32), et un amplificateur différentiel (42) dont les entrées sont raccordées à la sortie de chaque démodulateur (38, 40).
